# EUROPEAN PATENT APPLICATION

(11) **EP 4 482 235 A1**
(43) Date of publication of application: **25.12.2024**
(21) Application number: 22926498.1
(22) Date of filing: 18.02.2022
(51) Int. Cl.: H04W 72/04

(54) **QUASI-CO-LOCATION (QCL) INDICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/076956
(87) International publication number: WO 2023/155171

(57) **Abstract**

The present disclosure relates to the technical field of communications, and relates to a quasi-co-location (QCL) indication method and apparatus, a device, and a storage medium. The method comprises: a terminal device receives first information, the first information being used for indicating at least one first transmission configuration indication (TCI) state and/or at least one group of second TCI states (201), wherein each first TCI state is used for indicating a QCL parameter shared by downlink transmission and uplink transmission, and each group of second TCI states is used for indicating at least one of a dedicated QCL parameter for downlink transmission and a dedicated QCL parameter for uplink transmission. According to the present disclosure, the TCI states of a plurality of TRPs can be indicated, such that the flexibility of the indication of the TCI states is improved.

## Description

### TECHNICAL FIELD

The disclosure relates to a field of communication technologies, more particularly to a method and an apparatus for indicating a quasi co-location, a device and a storage medium.

### BACKGROUND

In a new radio (NR) system, particularly when a communication band is in a frequency range 2, a high-frequency channel decays rapidly. Therefore, in order to ensure a coverage, there needs to employ beam-based transmission and reception.

There needs further study how a network device indicates a beam for uplink transmission and downlink transmission to a terminal device.

### SUMMARY

Embodiments of the disclosure provide a method and an apparatus for indicating a quasi co-location, a device and a storage medium. The technical solution discloses the following.

According to an aspect of embodiments of the disclosure, there is provided a method for indicating a quasi co-location. The method includes:
receiving, by a terminal device, first information, in which the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

According to an aspect of embodiments of the disclosure, there is provided a method for indicating a quasi co-location. The method includes:
sending, by a network device, first information, in which the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

According to an aspect of embodiments of the disclosure, there is provided an apparatus for indicating a quasi co-location. The apparatus includes:
an information receiving module, configured to receive first information, in which the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

According to an aspect of embodiments of the disclosure, there is provided an apparatus for indicating a quasi co-location. The apparatus includes:
an information sending module, configured to send first information, in which the first information is configured to indicate at least one first transmission configuration indication(TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

According to an aspect of embodiments of the disclosure, there is provided a communication device. The communication device includes:
a processor; and
a memory, configured to store executable instructions by the processor. The processor is configured to load and execute the executable instructions to implement the above method for indicating the quasi co-location.

According to an aspect of embodiments of the disclosure, there is provided a computer readable storage medium. When instructions in the computer readable storage medium are executed by a processor, the above method for indicating the quasi co-location is executed.

According to an aspect of embodiments of the disclosure, there is provided a chip. The chip includes a programmable logic circuit and/or program instructions. When the chip operates on a communication device, the above method for indicating the quasi co-location is executed.

According to an aspect of embodiments of the disclosure, there is provided a computer program product. When the computer program product is executed by a processor, the above method for indicating the quasi co-location is executed.

The technical solution according to embodiments of the disclosure may include following beneficial effects.

The first TCI state and/or the at least one group of second TCI states are indicated by the first information. Indicating TCI states of multiple TRPs (multi-TRP, multi-transmission and reception point) may be implemented, and a flexibility of indicating the TCI state may be improved.

In addition, the disclosure may implement indicating TCI states of the multiple TRPs, and may further improve a transmission performance for the multiple TRPs.

### BRIEF DESCRIPTION OF THE DRAWINGS

The accompanying drawings, which are incorporated in and constitute a part of this specification, illustrate embodiments consistent with embodiments of the disclosure, and serve to explain the principle of the disclosure together with the specification.
FIG 1 is a block diagram illustrating a network structure according to an exemplary embodiment.
FIG 2 is a flowchart illustrating a method for indicating a quasi co-location according to an exemplary embodiment.
FIG 3 is a flowchart illustrating a method for indicating a quasi co-location according to another exemplary embodiment.
FIG 4 is a block diagram illustrating an apparatus for indicating a quasi co-location according to an exemplary embodiment.
FIG 5 is a block diagram illustrating an apparatus for indicating a quasi co-location according to another exemplary embodiment.
FIG 6 is a block diagram illustrating a communication device according to an exemplary embodiment.

### DETAILED DESCRIPTION

Exemplary embodiments will be described in detail herein, examples of which are illustrated in the accompanying drawings. When the following description refers to the accompanying drawings, the same or similar elements are denoted by the same numerals in different accompanying drawings, unless otherwise indicated. The implementations described in the following exemplary embodiments do not represent all implementations consistent with the disclosure. Instead, they are merely examples of apparatuses and methods consistent with some aspects of the disclosure as detailed in the appended claims.

It may be understood that, "a plurality" in the disclosure refers to two or more, and other quantifiers are similar thereto. Term "and/or", which describes an associated relationship of associated objects, may refer to three relationships. For example, A and/or B means that A exists alone, A and B exist at the same time, and B exists alone. A character "/" generally indicates that contextual objects are in an "or" relationship. Terms "a/an", "said" and "the" in the singular form are intended to include plural forms, unless clearly indicated in the context otherwise.

It is further understood that, terms such as "first", "second" and the like are used to describe various information, these information should not be limited by these terms. These terms are only used to distinguish information of the same type from each other and do not denote a particular order or degree of importance. As a matter of fact, the terms such as "first", "second" and the like may be used interchangeably. For example, without departing from the scope of the disclosure, a first message frame may be referred to as a second message frame, and similarly, the second message frame may be referred to as the first message frame.

It is further understood that, although operations are described in a specific order in the accompanying drawings in the embodiments of the disclosure, it should not be understood that these operations are required to be performed in the specific order illustrated or in a serial order, or that all of the operations illustrated are required to be performed to obtain desired results. In some circumstances, multitasking and parallel processing may be advantageous.

Other embodiments of the disclosure will be apparent to those skilled in the art from consideration of the specification and practice of the disclosure disclosed here. The disclosure is intended to cover any variations, uses, or adaptations of the disclosure following the general principles thereof and including common knowledge or conventional technical means illustrated in the art but not disclosed in the disclosure. The specification and embodiments are regarded as exemplary only, with the true scope and spirit of the disclosure being indicated by the appended claims.

It should be understood that, the disclosure is not limited to an exact construction that has been described above and illustrated in the accompanying drawings, and that various modifications and changes may be made without departing from the scope thereof. The scope of the disclosure is only limited by the appended claims.

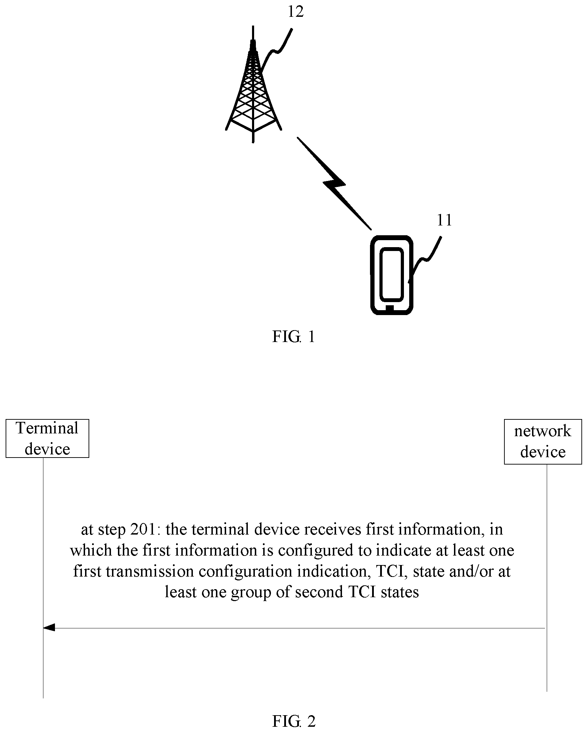

FIG 1 is a block diagram illustrating a network structure according to an exemplary embodiment. As illustrated in FIG 1, a system for indicating a quasi co-location, QCL, may include a terminal device 11 and a network device 12.

The terminal device 11 may include various handheld devices, vehicle-mounted devices, wearable devices, computing devices with a wireless communication function, or other processing devices connected to a wireless modem, as well as various forms of user equipments, such as a mobile station (MS), an Internet of things (IoT) device, an industry Internet of things (IIoT) device, etc. For the convenience of description, the above devices are collectively referred to as the terminal device. The terminal device 11 and the network device 12 communicate with each other through a certain air interface technology, such as a Uu interface.

The network device 12 may be a base station. The base station is a device deployed in an access network to provide the wireless communication function for the terminal device 11. The base station may be a base station of a service cell of the terminal device 11 or a base station of a cell adjacent to the service cell of the terminal device 11. The base station may include various forms of macro base stations, micro base stations, relay stations, access points, transmission and reception points (TRPs), etc. Names of devices with a base station function may be different in systems with different wireless access technologies. For example, in a 5G NR system, the device is called gNodeB or gNB. One base station may include at least one TRP. With the evolution of communication technologies, the name "base station" may change. In embodiments of the disclosure, the "network device" refers to an access network device, such as a base station, unless otherwise specified.

The "5G NR system" in embodiments of the disclosure may also be called 5G system or NR system, but those skilled in the art may understand the meaning of the 5G system or NR system. The technical solution described in embodiments of the disclosure may be applied to a long term evolution (LTE) system, the 5G NR system, a subsequent evolution system of the 5G NR system, and other communication systems such as a narrow band Internet of things (NB-IoT) system, which is not limited in the disclosure.

In Rel-16, a TCI state or spatial relationship information (spatialrelationinfo) of a physical downlink control channel (PDCCH), a physical downlink shared channel (PDSCH), a physical uplink shared channel (PUSCH), a physical uplink control channel (PUCCH), and/or a reference signal, and other signals are independently indicated. Furthermore, each of the PDCCH and the PUCCH activates one TCI state or spatialrelationinfo by using a media access control element (MAC CE). Each of the PDSCH and the PUSCH indicates the TCI state or the spatialrelationinfo corresponding to each of the PDSCH and the PUSCH by using downlink control information (DCI). The reference signal includes a demodulation reference signal (DMRS), a channel state information reference signal (CSI-RS) and a sounding reference signal (SRS), a positioning reference signal (PRS), a tracking reference signal (TRS), etc. The CSI-RS includes a CSI-RS for channel state information measurement, a CSI-RS for beam management or a CSI-RS for pathloss estimation. The SRS includes an SRS for channel state information measurement based on a codebook/non-codebook, or an SRS for beam management/positioning. Presently, in order to reduce signaling overhead, a unified TCI state is desired to be employed. The unified TCI state presently includes a joint TCI state, a separate downlink transmission configuration indication (separate DL TCI state), and a separate uplink transmission configuration indication (separate UL TCI state). The joint TCI state may indicate a QCL parameter shared by downlink transmission and uplink transmission. The separate DL TCI state is configured to indicate a QCL parameter dedicated to the downlink transmission. The separate UL TCI state is configured to indicate a QCL parameter dedicated to the uplink transmission.

In case that the network device indicates one separate DL TCI state for the downlink transmission, the TCI state may be used for the PDSCH and a proportion of PDCCH (such as user equipment (UE) dedicated PDCCH) of the terminal and some downlink reference signals. In case that the network device indicates one separate UL TCI state for the uplink transmission, the TCI state may be used for the PUSCH and the PUCCH of the terminal and some uplink reference signals. In case that the network device indicates one joint TCI state, the TCI state may be configured to the PDSCH and a proportion of PDCCH (such as UE dedicated PDCCH) of the terminal and some downlink reference signals; and/or, the PUSCH and the PUCCH of the terminal and some uplink reference signals.

Presently, only an indication of a TCI state of one TRP may be realized, and the indication of the TCI state is in a limited condition, and inflexible.

FIG 2 is a flowchart illustrating a method for indicating a quasi co-location according to an exemplary embodiment. In this embodiment, the method for indicating the quasi co-location being applied to the network architecture illustrated in FIG 1 is taken as an example. The method may include the following step 201.

At step 201, a terminal device receives first information. The first information is configured to indicate at least one first TCI state and/or at least one group of second TCI states.

Alternatively, the terminal device receives the first information from a network device. That is, the network device sends the first information to the terminal device, and the terminal device receives the first information sent by the network device.

Each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission. A channel feature of an antenna port (also referred to as reference signal port) may be deduced from another antenna port. Therefore, it is considered that, for the QCL of two ports, a channel estimation result obtained from one antenna port may be used for the other port.

Alternatively, the QCL parameter is also referred to as QCL assumption or QCL information. The TCI state includes the QCL parameter. The TCI state includes at least one of a QCL type A, a QCL type B, a QCL type C and a QCL type D. The QCL Type A, QCL Type B and QCL Type C include at least one of Doppler shift, Doppler spread, average delay and delay spread. The QCL Type D corresponds to space receiving parameter information. The QCL Type D may also be commonly called as beam information.

In some embodiments, the TCI state is configured to inform the terminal device of using a QCL parameter corresponding to which SSB or CSI-RS sent by the network device when receiving a DMRS of the PDCCH/PDSCH and/or the PDCCH/PDSCH; or inform the terminal device of using a QCL parameter, spatialrelationinfo or a spatial setting corresponding to which reference signal (such as the SRS or the CSI-RS) when sending the PUCCH/PUSCH.

In an exemplary embodiment, the first TCI state is a joint TCI state, which may indicate the QCL parameter shared by the downlink transmission and the uplink transmission.

Alternatively, the downlink transmission includes transmission of at least one of the PDSCH, the PDCCH and the downlink reference signal. The uplink transmission includes transmission of at least one of the PUSCH, the PUCCH and the uplink reference signal.

In some embodiments, a reference signal resource is indicated by a resource identifier or a resource set identifier.

In an exemplary embodiment, each group of second TCI states includes a separate DL TCI state and/or a separate UL TCI state. That is, for a certain group of second TCI states, the group of second TCI states may include only the separate DL TCI state, only the separate UL TCI state, or both separate DL TCI state and separate UL TCI state.

Alternatively, each group of second TCI states includes one or two second TCI states, and each second TCI state is configured to indicate the QCL parameter dedicated to the downlink transmission or the QCL parameter dedicated to the uplink transmission.

In some embodiments, a certain group of second TCI states may only be configured to indicate the QCL parameter dedicated to the downlink transmission, but not to indicate the QCL parameter dedicated to the uplink transmission. A certain group of second TCI states may also be configured only to indicate the QCL parameter dedicated to the uplink transmission, but not to indicate the QCL parameter dedicated to the downlink transmission. A certain group of second TCI states may also indicate both the QCL parameter dedicated to the downlink transmission and the QCL parameter dedicated to the uplink transmission.

Alternatively, for multiple TRPs, there are at least three following conditions.
(1) QCL parameters corresponding to multiple TRPs are indicated respectively by a plurality of first TCI states.
(2) QCL parameters corresponding to multiple TRPs are indicated respectively by a plurality of groups of second TCI states.
(3) QCL parameters corresponding to multiple TRPs are indicated respectively by at least one first TCI state and at least one group of second TCI states.

In some embodiments, taking n TRPs as an example, where n is an integer greater than 1, then:

for the above condition (1), the n TRPs may correspond to n first TCI states, and a QCL parameter (beam) of each TRP is indicated by one first TCI state;

for the above condition (2), the n TRPs may correspond to n groups of second TCI states, and a QCL parameter (beam) of each TRP is indicated by one group of second TCI states;

for the above condition (3), the n TRPs may correspond to n₁ first TCI states and n₂ groups of second TCI states, where n₁ plus, +, n₂ is equal to n, n₁ and n₂ are positive integers. A QCL parameter (beam) of each TRP is indicated by one first TCI state or one group of second TCI states.

Alternatively, the first information includes a first MAC CE. The first MAC CE activates at least one first TCI state and/or at least one group of second TCI states corresponding to one codepoint.

In some embodiments, the first information only activates one codepoint by the MAC CE to indicate the TCI state of one or more TRPs. When there needs to change the TCI state (that is, change the QCL parameter indicated by the TCI state), the terminal device receives a new MAC CE to activate a changed TCI state corresponding to one codepoint (of course, the changed TCI state includes at least one of the at least one first TCI state and the at least one group of second TCI states). Alternatively, a code point is also called as the codepoint.

In an exemplary embodiment, taking that a multi-TRP scene includes two TRPs as an example, the first MAC CE indicates the TCI state corresponding to each of the two TRPs (including a first TRP and a second TRP), there are at least following possible conditions.
(1) The first MAC CE only indicates a first TCI state corresponding to the first TRP, and does not indicate a TCI state corresponding to the second TRP.
(2) The first MAC CE indicates the first TCI state corresponding to the first TRP and a first TCI state corresponding to the second TRP.
(3) The first MAC CE indicates the first TCI state corresponding to the first TRP and a second TCI state corresponding to the second TRP.
(4) The first MAC CE only indicates a second TCI state corresponding to the first TRP, and does not indicate the TCI state corresponding to the second TRP.
(5) The first MAC CE indicates the second TCI state corresponding to the first TRP and the first TCI state corresponding to the second TRP.
(6) The first MAC CE indicates the second TCI state corresponding to the first TRP and the second TCI state corresponding to the second TRP.
(7) The first MAC CE indicates the first TCI state corresponding to the second TRP, and does not indicate the TCI state corresponding to the first TRP.
(8) The first MAC CE indicates the second TCI state corresponding to the second TRP, and does not indicate the TCI state corresponding to the first TRP.

It should be noted that, the second TCI state corresponding to the above TRP may refer to one or two second TCI states. That is, the second TCI state refers to the separate DL TCI state and/or the separate UL TCI state.

Alternatively, the first information includes a second MAC CE and DCI. The second MAC CE activates at least one first TCI state and/or at least one group of second TCI states corresponding to each of a plurality of codepoints, and the DCI indicates one of the plurality of codepoints.

In some embodiments, the second MAC CE activates the plurality of codepoints, and each codepoint in the plurality of codepoints corresponds to the TCI state of at least one TRP. Each codepoint in the multiple codepoints may indicate the TCI states of the plurality of TRPs. Alternatively, the DCI further indicates which codepoint in the plurality of codepoints is employed to indicate the TCI state of one or more TRPs in each time period, a present time period or a next time period.

In embodiments of the disclosure, the plurality of codepoints are activated by employing the MAC CE to indicate the TCI state of the one or more TRPs, and a codepoint employed every time is determined by indication information of corresponding DCI. Thus, there no need to replace the TCI state corresponding to the codepoint by employing the MAC CE for multiple times, and a time delay of updating the TCI state is reduced.

In conclusion, with the disclosure, the first TCI state and/or the at least one group of second TCI states are indicated by the first information. Indicating TCI states of multiple TRPs (multi-TRP, multi-transmission and reception point) may be implemented, and a flexibility of indicating the TCI state may be improved.

In addition, the disclosure may implement indicating the TCI states of the multiple TRPs, and may further improve a transmission performance for the multiple TRPs.

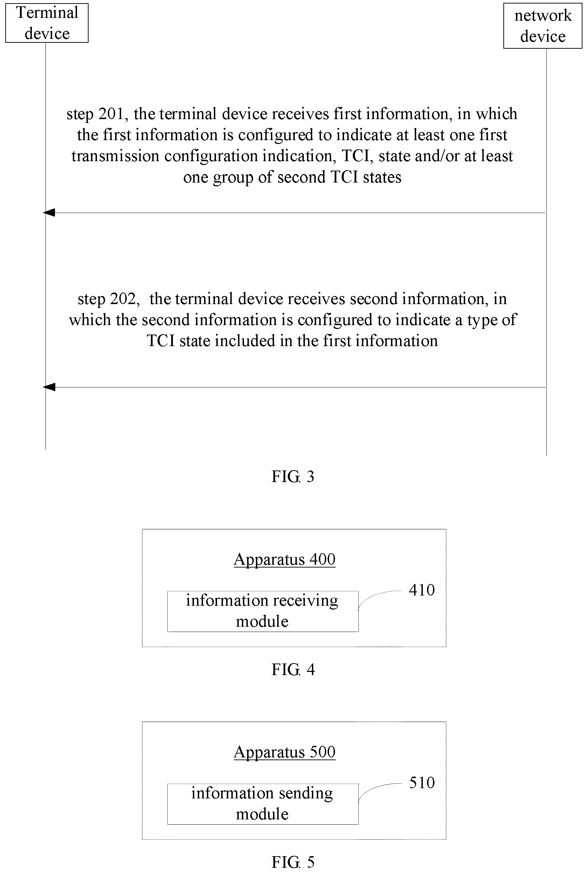

In an exemplary embodiment, as illustrated in FIG 3, the method for indicating the quasi co-location further includes the following step 202.

At step 202, the terminal device receives second information, in which the second information is configured to indicate one or more types of one or more TCI states included in the first information.

Alternatively, the terminal device receives the second information from the network device. That is, the network device sends the second information to the terminal device, and the terminal device receives the second information sent by the network device.

The types of TCI states include a first TCI state and a second TCI state.

In some embodiments, the first information and the second information are sequentially sent to the terminal device respectively. The first information and the second information may also be included in a same signaling and sent to the terminal device simultaneously. That is, step 201 may be executed before step 202, or step 201 and step 202 may be executed simultaneously.

Alternatively, the second information is configured to indicate that the type of TCI state included in the first information includes the first TCI state; or, the second information is configured to indicate that the type of TCI state included in the first information includes the second TCI state; or, the second information is configured to indicate that the types of TCI states included in the first information include the first TCI state and the second TCI state.

Alternatively, the types of TCI states included in the first information are independently indicated, or the types of TCI states included in the first information are simultaneously indicated.

In an exemplary embodiment, in a case that the second information is configured to indicate that the type of TCI state included in the first information includes the first TCI state, or that the second information is configured to indicate that the type of TCI state included in the first information includes the second TCI state, the second information may independently indicate the TCI states corresponding to the multiple TRPs respectively, or may simultaneously indicate the TCI states corresponding to the multiple TRPs.

For example, indicating independently may be that the first TRP corresponds to the first TCI state, the second TRP corresponds to the first TCI state, a third TRP corresponds to the first TCI state, etc. For another example, indicating independently may be that the first TRP corresponds to the second TCI state, the second TRP corresponds to the second TCI state, the third TRP corresponds to the second TCI state, etc. For another example, indicating simultaneously may be that all the multiple TRPs correspond to the first TCI state. For another example, indicating simultaneously may be that all the multiple TRPs correspond to the second TCI state.

In embodiments of the disclosure, in a case that the second information is configured to indicate that the type of TCI state included in the first information includes the first TCI state, or that the second information is configured to indicate that the type of TCI state included in the first information includes the second TCI state, the second information may indicate the TCI state corresponding to the multiple TRPs simultaneously. Thus, a signaling overhead is further saved.

It should be noted that, in a case that the second information is configured to indicate that the types of TCI states included in the first information include the first TCI state and the second TCI state, the types of TCI states included in the first information may only be indicated independently, but not simultaneously.

For example, taking two TRPs as an example, a certain codepoint may indicate that the first TRP corresponds to the first TCI state, and the second TRP corresponds to the second TCI state. Alternatively, a certain codepoint in the plurality of codepoints may indicate that the first TRP corresponds to the second TCI state, and the second TRP corresponds to the first TCI state. Alternatively, codepoint 1 in the plurality of codepoints may indicate that the first TRP corresponds to the first TCI state, and codepoint 2 in the plurality of codepoints may indicate that the second TRP corresponds to the second TCI state. Alternatively, codepoint 3 in the plurality of codepoints may indicate that the first TRP corresponds to the second TCI state, and codepoint 4 in the plurality of codepoints may indicate that the second TRP corresponds to the first TCI state.

In embodiments of the disclosure, following solutions (solutions 1 to 3) for indicating the type of TCI state in the multi-TRP scene are provided.

Solution 1: the second information is a radio resource control (RRC) signaling.

In some embodiments, the second information is an RRC signaling different from the first information, that is, the type of TCI state included in the first information is indicated by the RRC signaling.

Taking two TRPs as an example, in a case that the RRC signaling indicates that both the types of the two TRPs included in the first information are the first TCI state, each codepoint in the first information activates at most one first TCI state for each TRP. In a case that the RRC signaling indicates that both the types of two TRPs included in the first information are the second TCI state, each codepoint in the first information activates at most one group of second TCI states for each TRP, and the group of second TCI states includes one separate DL TCI state and/or one separate ULTCI state. In a case that the RRC signaling indicates that the type of the first TRP included in the first information is the first TCI state and the type of the second TRP included in the first information is the second TCI state, each codepoint in the first information activates at most one first TCI state for the first TRP and activates at most one group of second TCI states for the second TRP, and the group of second TCI states includes one separate DL TCI state and/or one separate UL TCI state.

Solution 2: the second information is an MAC CE.

In some embodiments, each TRP corresponds to at most two TCI states (i.e., a pair of second TCI states). Then, as illustrated in Table 1 below, for two TRPs, each codepoint corresponds to at most four TCI states.

**Table 1**

| | | |
|---|---|---|
| TCIcodepoint#0 | C1 | TCI 0,1 |
| | C2 | TCI 0,2 |
| | C3 | TCI 0,3 |
| | C4 | TCI 0,4 |
| TCIcodepoint# 1 | | TCI 1,1 |
| | | TCI 1,2 |
| | | TCI 1,3 |
| | | TCI 1,4 |
| ...... | | |

As illustrated in Table 1 above, for at least one TCI state, corresponding indication information (such as at least one of C1, C2, C3 and C4) is set to indicate whether a corresponding TCI state is present. In an exemplary embodiment, taking codepoint#0 as an example, TCI 0,1 and TCI 0,2 correspond to a same TRP. TCI 0,1 has at least the following two meanings.
(1) TCI 0,1 is the first TCI state, which is used for both the uplink transmission and the downlink transmission. In this case, TCI 0,2 will be absent.
(2) TCI 0,1 is the separate DL TCI state in the second TCI state. In this case, whenever TCI 0,2 is present, TCI 0,2 should refer to the separate UL TCI state in the second TCI state. However, TCI 0,2 may be absent, that is, only TCI 0,1 indicates the separate DL TCI state of a certain TRP. Because of present of the above two meanings, in this case, when TCI 0,2 is absent, the terminal device may not determine whether TCI 0,1 is the separate DL TCI state in the first TCI state or the separate DL TCI state in the second TCI state. In order to further distinguish, a one-bit type indicator may be further set for TCI 0,1, which is configured to distinguish the above two situations (i.e. to distinguish whether TCI 0,1 is the separate DL TCI state in the first TCI state or the separate DL TCI state in the second TCI state). Of course, it may be that TCI 0,2 is present, and TCI 0,1 is absent, a detailed explanation may be referred to the above. Therefore, for TCI0,1 and TCI0,2 corresponding to a certain codepoint, there is at least one combination of the following.

Combination 1: indication information corresponding to TCI0,1 indicates that TCI0,1 is absent, and indication information corresponding to TCI0,2 indicates that TCI0,2 is absent. A type indicator of TCI0,1 is indicated as 0 or 1 (since both TCI0,1 and TCI0,2 are absent, the type indicator of TCI0,1 is moot). Then, TCI 0,1 is absent, and TCI 0,2 is absent.

Combination 2: indication information corresponding to TCI0,1 indicates that TCI0,1 is present, and indication information corresponding to TCI0,2 indicates that TCI0,2 is absent. A type indicator of TCI0,1 indicates that TCI0,1 is the first TCI state. Then, TCI 0,1 is present and TCI0,2 is absent.

Combination 3: indication information corresponding to TCI0,1 indicates that TCI0,1 is present, and indication information corresponding to TCI0,2 indicates that TCI0,2 is absent. A type indicator of TCI0,1 indicates that TCI0,1 is the second TCI state. Then, TCI 0,1 is present and TCI0,2 is absent.

Combination 4: indication information corresponding to TCI0,1 indicates that TCI0,1 is present, and indication information corresponding to TCI0,2 indicates that TCI0,2 is present. A type indicator of TCI0,1 indicates that TCI0,1 is the second TCI state. Then, TCI 0,1 is present and TCI0,2 is present.

Combination 5: indication information corresponding to TCI0,1 indicates that TCI0,1 is absent, and indication information corresponding to TCI0,2 indicates that TCI0,2 is present. A type indicator of TCI0,1 indicates that TCI0,1 is the second TCI state. Then, TCI 0,1 is absent and TCI0,2 is present.

As illustrated in Table 1 above, TCI 0,3 and TCI 0,4 of codepoint#0 correspond to the other TRP of the two TRPs. For introduction of the meanings of TCI 0,3 and TCI 0,4, please refer to the introduction of the TCI0,1 and TCI0,2 above.

Alternatively, the second information and the first information share a same MAC CE (such as a first MAC CE or a second MAC CE), or the second information and the first information employs different MAC CEs.

Alternatively, the following is an example in which the second information and the first information employ different MAC CEs.

Illustratively, the second information indicates that the type of TCI state of one TRP is the first TCI state by employing one MAC CE, and the other MAC CE corresponding to the first information only needs to activate at most one first TCI state for each codepoint of the TRP. Further, for each codepoint of the TRP, the first information also includes one piece of indication information indicating whether the first TCI state is present.

Illustratively, the second information indicates that the type of TCI state of one TRP is the second TCI state by employing one MAC CE, and the other MAC CE corresponding to the first information needs to activate at most two second TCI states for each codepoint of the TRP. Further, for each codepoint of the TRP, the first information also includes two pieces of indication information respectively indicating whether two second TCI states are present.

Alternatively, in a case that the second information and the first information share the same MAC CE, each codepoint includes a first information field and a second information field. The first information field is configured to carry the first information, and the second information field is configured to carry the second information.

Illustratively, for one TRP, each codepoint of one MAC CE may include an indicator field of one of following combinations, where the type indicator is the second information field, and others are the first information field.

Combination 1: the indication information corresponding to TCI0,1 indicates that TCI0,1 is absent, the indication information corresponding to TCI0,2 indicates that TCI0, 2 is absent. The type indicator indicates 0 or 1 (since TCI0,1 and TCI0,2 are absent, the type indicator is moot). Then, TCI 0,1 is absent, and TCI 0,2 is absent.

Combination 2: the indication information corresponding to TCI0,1 indicates that TCI0,1 is present, and the indication information corresponding to TCI0,2 indicates that TCI0,2 is absent. The type indicator indicates that TCI0,1 is the first TCI state. Then TCI 0,1 is present and TCI0,2 is absent.

Combination 3: the indication information corresponding to TCI0,1 indicates that TCI0,1 is present, and the indication information corresponding to TCI0,2 indicates that TCI0,2 is absent. The type indicator indicates that TCI0,1 is the second TCI state. Then, TCI 0,1 is present and TCI0,2 is absent.

Combination 4: the indication information corresponding to TCI0,1 indicates TCI0,1 is present, and the indication information corresponding to TCI0,2 indicates TCI0 is present. The type indicator indicates that TCI0,1 is the second TCI state. Then, TCI 0,1 is present and TCI0,2 is present.

Combination 5: the indication information corresponding to TCI0,1 indicates that TCI0,1 is absent, and the indication information corresponding to TCI0,2 indicates that TCI0,2 is present. The type indicator indicates that TCI0,1 is the second TCI state. Then TCI 0,1 is absent and TCI0,2 is present.

Solution 3: the type of TCI state is indicated by the DCI.

Alternatively, the DCI is also configured to indicate the type of TCI status included in the first information.

In some embodiments, in a case that the first information includes the second MAC CE and the DCI, in response to the second MAC CE not indicating the type of TCI state, the type of TCI state may be indicated by the DCI. Alternatively, the DCI may indicate that the type of TCI state is the first TCI state and/or the second TCI state.

Alternatively, a format of DCI is a DCI format for scheduling the PDSCH.

The DCI format for scheduling the PDSCH includes at least one of DCI format 1_0, DCI format 1_1 and DCI format 1_2.

Alternatively, the DCI includes a downlink assignment indication field (that is, includes DCI format with DL assignment), or does not include the downlink assignment indication field (that is, includes DCI format without DL assignment). The downlink assignment indication field is configured to indicate a transmission resource of the PDSCH.

In some embodiments, in response to the DCI including the downlink assignment indication field, it indicates that the DCI is configured to indicate both the type of TCI state included in the first information and the transmission resource of the PDSCH.

In some embodiments, in response to the DCI not including the downlink assignment indication field, it indicates that the DCI is configured to indicate the type of TCI state included in the first information, but not to indicate the transmission resource of the PDSCH.

Alternatively, the DCI format for scheduling the PDSCH is configured to indicate that the type of TCI state included in the first information includes the first TCI state and/or the second TCI state.

In some embodiments, the DCI format for scheduling the PDSCH may indicate whether the types of TCI states are both the first TCI state or are both the second TCI state, or include the first TCI state and the second TCI state, which is similar to the condition illustrated in Table 1 above.

Alternatively, the DCI format for scheduling the PDSCH is configured to indicate that the type of TCI state included in the first information includes the first TCI state and/or the second TCI state dedicated to the downlink transmission. In this case, each codepoint in the MAC CE corresponds to at most one TCI state for each TRP, and the codepoint is configured to indicate whether each TRP is the first TCI state or the second TCI state dedicated to the downlink transmission (that is, the separate DL TCI state in the second TCI state).

In embodiments of the disclosure, since each TRP corresponds to at most one TCI state, in response to each TRP corresponding to the second TCI state, the TCI state should be the second TCI state dedicated to the downlink transmission. There no need to indicate whether the second TCI state is used for the downlink transmission or the uplink transmission by more signaling overhead. Thus, the signaling overhead may be further saved.

Alternatively, the DCI format for scheduling the PDSCH is configured to indicate that the type of TCI state included in the first information only includes the second TCI state dedicated to the downlink transmission.

Alternatively, the DCI includes a TCI state type indication field, the TCI state type indication field is configured to indicate that a TCI state indicated by the DCI includes at least one of the first TCI state, the second TCI state and the second TCI state dedicated to the downlink transmission.

In some embodiments, the TCI state type indication field is configured to indicate that the TCI state indicated by the DCI only includes the first TCI state, or the TCI state type indication field is configured to indicate that the TCI state indicated by the DCI only includes the second TCI state. The second TCI state refers to at least one of the separate DL TCI state and the separate UL TCI state. Alternatively, the TCI state type indication field is configured to indicate that the TCI state indicated by the DCI only includes the second TCI state dedicated to the downlink transmission. Alternatively, the TCI state type indication field is configured to indicate that the TCI states indicated by the DCI include the first TCI state and the second TCI state. Alternatively, the TCI state type indication field is configured to indicate that the TCI states indicated by the DCI include the first TCI state and the second TCI state dedicated to the downlink transmission.

Alternatively, the format of DCI is a DCI format for scheduling the PUSCH.

The DCI format for scheduling the PUSCH includes at least one of DCI format 0_0, DCI format 0_1 and DCI format 0_2.

In some embodiments, the TCI state type indication field may multiplex one SRI information field of Rel-16 or at least one of two SRI indication fields of Rel-17. In a case that the two SRI indication fields of Rel-17 are multiplexed, different SRI may be employed to correspond to different TRPs, and different codepoints may be indicated independently, and each codepoint corresponds to one first TCI state or one group of second TCI states.

Alternatively, the DCI includes an uplink assignment indication field (that is, includes DCI format with UL assignment), or does not includes the uplink assignment indication field (that is, includes DCI format without UL assignment), and the uplink assignment indication field is configured to indicate a transmission resource of the PUSCH.

In some embodiments, in response to the DCI including the uplink assignment indication field, it indicates that the DCI is configured to indicate both the type of TCI state included in the first information and the transmission resource of the PUSCH.

In some embodiments, in response to the DCI not including the uplink assignment indication field, it indicates that the DCI is configured to indicate the type of TCI state included in the first information, but not to indicate the transmission resource of the PUSCH.

In some embodiments, in a case that the DCI does not include the uplink assignment indication field, on a bit field not need to be used (such as a bit field originally for indicating an uplink resource), it may be indicated by a prescribed symbol that the DCI does not include the uplink assignment indication field (or does not include the downlink assignment indication field ), but only indicates the type of TCI state included in the first information. The terminal device may detect that the DCI is only configured to indicate the unified TCI state by the prescribed symbol. Alternatively, the specified symbol may be 0, 1, 0000, 1111, etc., which is not limited by embodiment of the disclosure.

In some embodiments, the unified TCI state may also be configured to transmission of the reference signal.

Alternatively, the DCI format for scheduling the PUSCH is configured to indicate that the type of TCI state included in the first information includes the first TCI state and/or the second TCI state.

In some embodiments, the DCI format for scheduling the PUSCH may indicate whether the types of TCI states are both the first TCI state, or are both the second TCI state, or include the first TCI state and the second TCI state, which is similar to the condition illustrated in Table 1 above.

Alternatively, the DCI format for scheduling the PUSCH is configured to indicate that the type of TCI state included in the first information includes the first TCI state and/or the second TCI state dedicated to the uplink transmission. In this case, each codepoint in the MAC CE corresponds to at most one TCI state for each TRP, and the codepoint is configured to indicate whether each TRP is the first TCI state or the second TCI state dedicated to the uplink transmission (that is, the separate UL TCI state in the second TCI state).

In embodiments of the disclosure, since each TRP corresponds to at most one TCI state, in response to each TRP corresponding to the second TCI state, the second TCI state should be the second TCI state dedicated to the uplink transmission. There is no need to indicate whether the second TCI state is used for the downlink transmission or the uplink transmission through more signaling overhead. Thus, the signaling overhead may be further saved.

Alternatively, the DCI format for scheduling the PUSCH is configured to indicate that the type of TCI state included in the first information only includes the second TCI state dedicated to the uplink transmission.

Alternatively, the DCI includes the TCI state type indication field, and the TCI state type indication field is configured to indicate that a TCI state indicated by the DCI includes at least one of the first TCI state, the second TCI state and the second TCI state dedicated to the uplink transmission.

In some embodiments, the TCI state type indication field is configured to indicate that the TCI state indicated by the DCI only includes the first TCI state; or, the TCI state type indication field is configured to indicate that the TCI state indicated by the DCI only includes the second TCI state. The second TCI state refers to at least one of the separate DL TCI state and the separate UL TCI state. Alternatively, the TCI state type indication field is configured to indicate that the TCI state indicated by the DCI only includes the second TCI state dedicated to the uplink transmission. Alternatively, the TCI state type indication field is configured to indicate that the TCI states indicated by the DCI include the first TCI state and the second TCI state. Alternatively, the TCI state type indication field is configured to indicate that the TCI states indicated by the DCI includes the first TCI state and the second TCI state dedicated to the uplink transmission.

The above solutions one to three explicitly indicate the type of the TCI state. Embodiments of the disclosure also provide following solutions that implicitly indicate the type of TCI state.

Alternatively, the first information includes at least one group of information fields, and each group of information fields includes a third information field and a fourth information field.

In some embodiments, the third information field and the fourth information field belonging to a same group of information fields carry two same TCI states respectively. In some embodiments, in a case that the third information field and the fourth information field belonging to the same group of information fields carry the two same TCI states, it may be indicated that the type of TCI state in the group of information fields is the first TCI state.

In some embodiments, the third information field and the fourth information field belonging to the same group of information fields carry two different TCI states respectively. In some embodiments, in a case that the third information field and the fourth information field belonging to the same group of information fields carry the two different TCI states, it may be indicated that the type of TCI state in the group of information fields is the second TCI state.

In some embodiments, in a case that the third information field is prior to the fourth information field, it indicates that the third information field carries the second TCI state dedicated to the downlink transmission and the fourth information field carries the second TCI state dedicated to the uplink transmission.

In some embodiments, in a case that the third information field is prior to the fourth information field, it indicates that the third information field carries the second TCI state dedicated to the uplink transmission and the fourth information field carries the second TCI state dedicated to the downlink transmission.

Alternatively, in a case that the third information field and the fourth information field belonging to the same group of information fields carry two different TCI states, the second TCI state carried in the third information field is configured to indicate the QCL parameter dedicated to the downlink transmission, and the second TCI state carried in the fourth information field is configured to indicate the QCL parameter dedicated to the uplink transmission.

Alternatively, in a case that the third information field and the fourth information field belonging to the same group of information fields carry two different TCI states, the second TCI state carried in the third information field is configured to indicate the QCL parameter dedicated to the uplink transmission, and the second TCI state carried in the fourth information field is configured to indicate the QCL parameter dedicated to the downlink transmission.

In embodiments of the disclosure, implicitly indicating the type of TCI state may be implemented based on a predetermined rule or protocol. The type of TCI state in the information field may be determined without a clear indication by a signaling during communication. Thus, the signaling overhead may be saved.

It should be noted that, the above related steps executed the terminal device may be independently implemented as the method for indicating the QCL in the terminal device side. The above related steps executed the network device may be independently implemented as a method for indicating the QCL in the network device side.

The following is apparatus embodiments of the disclosure, which may be configured to execute method embodiments of the disclosure. For details not disclosed in apparatus embodiments of the disclosure, please refer to the method embodiments of the disclosure.

FIG 4 is a block diagram illustrating an apparatus for indicating a quasi co-location according to an exemplary embodiment. The apparatus 400 may be the terminal device described above, or may be provided in the terminal device. The apparatus 400 may include:
an information receiving module 410, configured to receive first information. The first information is configured to indicate at least one first transmission configuration indication (TCI) state and/or at least one group of second TCI states. Each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

Alternatively, each group of second TCI states includes one or two second TCI states, and each second TCI state is configured to indicate the QCL parameter dedicated to the downlink transmission or the QCL parameter dedicated to the uplink transmission.

Alternatively, the first information includes a first media access layer control element (MAC CE), and the first MAC CE activates at least one first TCI state and/or at least one group of second TCI states corresponding to one codepoint.

Alternatively, the first information includes a second MAC CE and downlink control information (DCI). The second MAC CE activates at least one first TCI state and/or at least one group of second TCI states corresponding to each of multiple codepoints, and the DCI indicates one of the multiple codepoints.

Alternatively, the information receiving module 410 is further configured to receive second information. The second information is configured to indicate one or more types of one or more TCI states included in the first information.

Alternatively, the second information is configured to indicate that the type of TCI state included in the first information includes the first TCI state; or, the second information is configured to indicate that the type of TCI state included in the first information includes the second TCI state; or, the second information is configured to indicate that the types of TCI states included in the first information include the first TCI state and the second TCI state.

Alternatively, the types of TCI states included in the first information are independently indicated, or the types of TCI states included in the first information are simultaneously indicated.

Alternatively, the second information is a radio resource control (RRC) signaling.

Alternatively, the second information is an MAC CE.

Alternatively, the second information and the first information share a same MAC CE, or the second information and the first information employ different MAC CEs.

Alternatively, in a case that the second information and the first information share the same MAC CE, each codepoint includes a first information field and a second information field, in which the first information field is configured to carry the first information, and the second information field is configured to carry the second information.

Alternatively, the DCI is further configured to indicate a type of TCI state included in the first information.

Alternatively, a format of the DCI is a DCI format for scheduling a physical downlink shared channel (PDSCH).

Alternatively, the DCI includes a downlink assignment indication field, or does not include the downlink assignment indication field, the downlink assignment indication field is configured to indicate a downlink transmission resource.

Alternatively, the DCI format for scheduling the PDSCH is configured to indicate that the type of TCI state included in the first information includes the first TCI state and/or the second TCI state.

Alternatively, the DCI includes a TCI state type indication field, and the TCI state type indication field is configured to indicate that a TCI state indicated by the DCI includes at least one of the first TCI state, the second TCI state, and a second TCI state dedicated to the downlink transmission.

Alternatively, a format of the DCI is a DCI format for scheduling a physical uplink shared channel (PUSCH).

Alternatively, the DCI includes an uplink assignment indication field, or does not include the uplink assignment indication field, and the uplink assignment indication field is configured to indicate an uplink transmission resource.

Alternatively, the DCI format for scheduling the PUSCH is configured to indicate that the type of TCI state included in the first information includes the first TCI state and/or the second TCI state.

Alternatively, the DCI includes a TCI state type indication field. The TCI state type indication field is configured to indicate that a TCI state indicated by the DCI includes at least one of the first TCI state, the second TCI state, and a second TCI state dedicated to the uplink transmission.

Alternatively, the first information includes at least one group of information fields, and each group of information fields includes a third information field and a fourth information field.

The third information field and the fourth information field belonging to a same group of information fields carry two same TCI states respectively; or the third information field and the fourth information field belonging to a same group of information fields carry two different TCI states respectively.

Alternatively, in a case that the third information field and the fourth information field belonging to the same group of information fields carry two different TCI states, a second TCI state carried in the third information field is configured to indicate the QCL parameter dedicated to the downlink transmission, and a second TCI state carried in the fourth information field is configured to indicate the QCL parameter dedicated to the uplink transmission; or a second TCI state carried in the third information field is configured to indicate the QCL parameter dedicated to the uplink transmission, and a second TCI state carried in the fourth information field is configured to indicate the QCL parameter dedicated to the downlink transmission.

Alternatively, the downlink transmission includes transmission of at least one of the PDSCH, a physical downlink control channel (PDCCH), and a downlink reference signal, and the uplink transmission includes transmission of at least one of the PUSCH, the physical uplink control channel (PUCCH) and an uplink reference signal.

In conclusion, with the disclosure, the first TCI state and/or the at least one group of second TCI states are indicated by the first information. Indicating TCI states of multiple TRPs (multi-TRP, multi-transmission and reception point) may be implemented, and a flexibility of indicating the TCI state may be improved.

FIG 5 is a block diagram illustrating an apparatus for indicating a quasi co-location according to an exemplary embodiment. The apparatus 500 may be the network device described above, or may be provided in the network device. The apparatus 500 may include:
an information sending module 510, configured to send first information. The first information is configured to indicate at least one first transmission configuration indication (TCI) state and/or at least one group of second TCI states. Each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

Alternatively, each group of second TCI states includes one or two second TCI states, and each second TCI state is configured to indicate the QCL parameter dedicated to the downlink transmission or the QCL parameter dedicated to the uplink transmission.

Alternatively, each group of second TCI states includes one or two second TCI states, and each second TCI state is configured to indicate the QCL parameter dedicated to the downlink transmission or the QCL parameter dedicated to the uplink transmission.

Alternatively, the first information includes a first media access layer control element (MAC CE), and the first MAC CE activates at least one first TCI state and/or at least one group of second TCI states corresponding to one codepoint.

Alternatively, the first information includes a second MAC CE and downlink control information (DCI). The second MAC CE activates at least one first TCI state and/or at least one group of second TCI states corresponding to each of multiple codepoints, and the DCI indicates one of the plurality of codepoints.

Alternatively, the information sending module 510 is further configured to send second information. The second information is configured to indicate one or more types of one or more TCI states included in the first information.

Alternatively, the second information is configured to indicate that the type of TCI state included in the first information includes the first TCI state; or, the second information is configured to indicate that the type of TCI state included in the first information includes the second TCI state; or, the second information is configured to indicate that the types of TCI states included in the first information includes the first TCI state and the second TCI state.

Alternatively, the types of TCI states included in the first information are independently indicated, or the types of TCI states included in the first information are simultaneously indicated.

Alternatively, the second information is a radio resource control (RRC) signaling.

Alternatively, the second information is an MAC CE.

Alternatively, the second information and the first information share a same MAC CE, or the second information and the first information employ different MAC CEs.

Alternatively, in a case that that the second information and the first information share the same MAC CE, each codepoint includes a first information field and a second information field, in which the first information field is configured to carry the first information, and the second information field is configured to carry the second information.

Alternatively, the DCI is further configured to indicate a type of TCI state included in the first information.

Alternatively, a format of the DCI is a DCI format for scheduling a physical downlink shared channel (PDSCH).

Alternatively, the DCI includes a downlink assignment indication field, or does not include a downlink assignment indication field, and the downlink assignment indication field is configured to indicate a downlink transmission resource.

Alternatively, the DCI format for scheduling the PDSCH is configured to indicate that the type of TCI state included in the first information includes the first TCI state and/or the second TCI state.

Alternatively, the DCI includes a TCI state type indication field, the TCI state type indication field of the types of TCI states is configured to indicate that a TCI state indicated by the DCI includes at least one of the first TCI state, the second TCI state, and a second TCI state dedicated to the downlink transmission.

Alternatively, a format of the DCI is a DCI format for scheduling a physical uplink shared channel (PUSCH).

Alternatively, the DCI includes an uplink assignment indication field, or does not include the uplink assignment indication field, and the uplink assignment indication field is configured to indicate an uplink transmission resource.

Alternatively, the DCI format for scheduling the PUSCH is configured to indicate that the type of TCI state included in the first information include the first TCI state and/or the second TCI state.

Alternatively, the DCI includes a TCI state type indication field. The TCI state type indication field is configured to indicate that a TCI state indicated by the DCI includes at least one of the first TCI state, the second TCI state, and a second TCI state dedicated to the uplink transmission.

Alternatively, the first information includes at least one group of information fields, and each group of information fields includes a third information field and a fourth information field.

The third information field and the fourth information field belonging to a same group of information fields carry two same TCI states respectively; or the third information field and the fourth information field belonging to a same group of information fields carry two different TCI states respectively.

Alternatively, in a case that the third information field and the fourth information field belonging to the same group of information fields carry two different TCI states respectively, a second TCI state carried in the third information field is configured to indicate the QCL parameter dedicated to the downlink transmission, and a second TCI state carried in the fourth information field is configured to indicate the QCL parameter dedicated to the uplink transmission; or a second TCI state carried in the third information field is configured to indicate the QCL parameter dedicated to the uplink transmission, and a second TCI state carried in the fourth information field is configured to indicate the QCL parameter dedicated to the downlink transmission.

Alternatively, the downlink transmission includes transmission of at least one of the PDSCH, a physical downlink control channel (PDCCH), and a downlink reference signal, and the uplink transmission includes transmission of at least one of the PUSCH, a physical uplink control channel (PUCCH) and an uplink reference signal.

In conclusion, with the disclosure, the first TCI state and/or the at least one group of second TCI states are indicated by the first information. Indicating TCI states of multiple TRPs (multi-TRP, multi-transmission and reception point) may be implemented, and a flexibility of indicating the TCI state may be improved.

It should be noted that, when the apparatuses according to the above embodiments implement the function indicated by the quasi co-location, division of the above functional modules is only taken as an example. In a practical application, the above function may be allocated to different functional modules for completion based on an actual requirement, that is, a content structure of the apparatus may be divided into different functional modules to complete all or part of the above functions.

With regard to the apparatus in the above embodiments, the detailed method in which each module performs operations has been described in detail in the embodiments of the method, which is not described in detail here.

An exemplary embodiment of the disclosure also provides a device for indicating a quasi co-indication, which may implement the method for indicating the quasi co-location in the terminal device side according to the disclosure. The device includes a processor and a memory for storing executable instructions by the processor. The processor is configured to:
receiving first information, in which the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

For further explanation of the device, please refer to the above contents, which is not elaborated here.

An exemplary embodiment of the disclosure also provides a device for indicating a quasi co-indication, which may implement the method for indicating the quasi co-location in the network device side according to the disclosure. The device includes a processor and a memory for storing executable instructions by the processor. The processor is configured to:
sending first information, in which the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

For further explanation of the device, please refer to the above contents, which is not elaborated here.

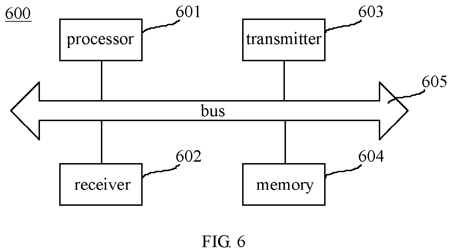

FIG 6 is a block diagram illustrating a communication device 600 according to an exemplary embodiment. The communication device 600 may include a processor 601, a receiver 602, a transmitter 603, a memory 604 and a bus 605.

The processor 601 includes one or more processing cores. The processor 601 is configured to execute various functional applications and information processing by operating software programs and modules.

The receiver 602 and the transmitter 603 may be implemented as a communication component. The communication component may be a communication chip.

The memory 604 is connected to the processor 601 through the bus 605.

The memory 604 may be configured to store at least one program code. The processor 601 is configured to execute the at least one instruction to implement the steps in the above method embodiments.

In addition, the memory 604 may be implemented by any type of volatile or nonvolatile memory devices or a combination thereof. The volatile or nonvolatile memory device includes, but not limited to: a magnetic disk or optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an exemplary embodiment, there is further provided a computer readable storage medium. Instructions in the computer readable storage medium are executed by a processor to cause the processor to implement the method for indicating the quasi co-location.

In an exemplary embodiment, there is provided a chip. The chip includes a programmable logic circuit and/or program instructions. The chip is configured to implement the method for indicating the quasi co-location when the chip runs on the terminal or the network device.

In an exemplary embodiment, there is provided a computer program product. The computer program product is configured to implement the method for indicating the quasi co-location when executed by a processor of the terminal or the network device.

An exemplary embodiment of the disclosure also provides a system for indicating a quasi co-location. The system includes the terminal device and the network device. Either the terminal device or the network device may be the communication device provided in an embodiment illustrated in FIG 6.

Other embodiments of the disclosure will be apparent to those skilled in the art from consideration of the specification and practice of the disclosure disclosed here. The disclosure is intended to cover any variations, uses, or adaptations of the disclosure following the general principles thereof and including common knowledge or conventional technical means illustrated in the art but not disclosed in the disclosure. The specification and embodiments are to be regarded as exemplary only, with the true scope and spirit of the disclosure being indicated by the appended claims.

It should be understood that, the disclosure is not limited to an exact construction that has been described above and illustrated in the accompanying drawings, and that various modifications and changes may be made without departing from the scope thereof. The scope of the disclosure is only limited by the appended claims.

## Claims

1. A method for indicating a quasi co-location (QCL), comprising:
receiving, by a terminal device, first information, wherein the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

2. The method of claim 1, wherein each group of second TCI states comprises one or two second TCI states, and each second TCI state is configured to indicate the QCL parameter dedicated to the downlink transmission or the QCL parameter dedicated to the uplink transmission.

3. The method of claim 1 or 2, wherein the first information comprises a first media access layer control element (MAC CE) and the first MAC CE activates at least one first TCI state and/or at least one group of second TCI states corresponding to one codepoint.

4. The method of claim 1 or 2, wherein the first information comprises a second MAC CE and downlink control information (DCI), wherein the second MAC CE activates at least one first TCI state and/or at least one group of second TCI states corresponding to each of a plurality of codepoints, and the DCI indicates one of the plurality of codepoints.

5. The method of any of claims 1 to 4, further comprising:
receiving, by the terminal device, second information, wherein the second information is configured to indicate one or more types of one or more TCI states comprised in the first information.

6. The method of claim 5, wherein the second information is configured to indicate that the type of TCI state comprised in the first information comprises the first TCI state; or
the second information is configured to indicate that the type of TCI state comprised in the first information comprises the second TCI state; or
the second information is configured to indicate that the types of TCI states comprised in the first information comprise the first TCI state and the second TCI state.

7. The method of claim 5 or 6, wherein the types of TCI states comprised in the first information are independently indicated, or the types of TCI states comprised in the first information are simultaneously indicated.

8. The method of any of claims 5 to 7, wherein the second information is a radio resource control (RRC) signaling.

9. The method of any of claims 5 to 7, wherein the second information is an MAC CE.

10. The method of claim 9, wherein the second information and the first information share a same MAC CE, or the second information and the first information employ different MAC CEs.

11. The method of claim 10, wherein, in a case that the second information and the first information share the same MAC CE, each codepoint comprises a first information field and a second information field, wherein the first information field is configured to carry the first information, and the second information field is configured to carry the second information.

12. The method of claim 4, wherein the DCI is further configured to indicate a type of TCI state comprised in the first information.

13. The method of claim 12, wherein a format of the DCI is a DCI format for scheduling a physical downlink shared channel (PDSCH).

14. The method of claim 13, wherein the DCI comprises a downlink assignment indication field, or does not comprise the downlink assignment indication field, the downlink assignment indication field is configured to indicate a downlink transmission resource.

15. The method of any of claims 13 or 14, wherein the DCI format for scheduling the PDSCH is configured to indicate that the type of TCI state comprised in the first information comprises the first TCI state and/or the second TCI state.

16. The method of claim 15, wherein the DCI comprises a TCI state type indication field, and the TCI state type indication field is configured to indicate that a TCI state indicated by the DCI comprises at least one of the first TCI state, the second TCI state, and a second TCI state dedicated to the downlink transmission.

17. The method of claim 12, wherein a format of the DCI is a DCI format for scheduling a physical uplink shared channel (PUSCH).

18. The method of claim 17, wherein the DCI comprises an uplink assignment indication field, or does not comprise the uplink assignment indication field, and the uplink assignment indication field is configured to indicate an uplink transmission resource.

19. The method of claim 17 or 18, wherein the DCI format for scheduling the PUSCH is configured to indicate that the type of TCI state comprised in the first information comprises the first TCI state and/or the second TCI state.

20. The method of claim 19, wherein the DCI comprises a TCI state type indication field, wherein the TCI state type indication field is configured to indicate that a TCI state indicated by the DCI comprises at least one of the first TCI state, the second TCI state, and a second TCI state dedicated to the uplink transmission.

21. The method of any of claims 1 to 4, wherein the first information comprises at least one group of information fields, and each group of information fields comprises a third information field and a fourth information field;
the third information field and the fourth information field belonging to a same group of information fields carry two same TCI states respectively; or
the third information field and the fourth information field belonging to a same group of information fields carry two different TCI states respectively.

22. The method of claim 21, wherein, in a case that the third information field and the fourth information field belonging to the same group of information fields carry two different TCI states,
a second TCI state carried in the third information field is configured to indicate the QCL parameter dedicated to the downlink transmission, and a second TCI state carried in the fourth information field is configured to indicate the QCL parameter dedicated to the uplink transmission; or
a second TCI state carried in the third information field is configured to indicate the QCL parameter dedicated to the uplink transmission, and a second TCI state carried in the fourth information field is configured to indicate the QCL parameter dedicated to the downlink transmission.

23. The method according to any of claims 1 to 22, wherein the downlink transmission comprises transmission of at least one of the PDSCH, a physical downlink control channel (PDCCH), and a downlink reference signal; and
the uplink transmission comprises transmission of at least one of the PUSCH, the physical uplink control channel (PUCCH) and an uplink reference signal.

24. A method for indicating a quasi co-location (QCL), comprising:
sending, by a network device, first information, wherein the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

25. The method of claim 24, wherein each group of second TCI states comprises one or two second TCI states, and each second TCI state is configured to indicate the QCL parameter dedicated to the downlink transmission or the QCL parameter dedicated to the uplink transmission.

26. The method of claim 24 or 25, wherein the first information comprises a first media access layer control element (MAC CE), and the first MAC CE activates at least one first TCI state and/or at least one group of second TCI states corresponding to one codepoint.

27. The method of claim 24 or 25, wherein the first information comprises a second MAC CE and downlink control information (DCI), wherein the second MAC CE activates at least one first TCI state and/or at least one group of second TCI states corresponding to each of a plurality of codepoints, and the DCI indicates one of the plurality of codepoints.

28. The method of any of claims 24 to 27, further comprising:
sending, by the network device, second information, wherein the second information is configured to indicate one or more types of one or more TCI states comprised in the first information.

29. The method of claim 28, wherein the second information is configured to indicate that the type of TCI state comprised in the first information comprises the first TCI state; or
the second information is configured to indicate that the type of TCI state comprised in the first information comprises the second TCI state; or
the second information is configured to indicate that the types of TCI states comprised in the first information comprise the first TCI state and the second TCI state.

30. The method of claim 28 or 29, wherein the types of TCI states comprised in the first information are independently indicated, or the types of TCI states comprised in the first information are simultaneously indicated.

31. The method of any of claims 28 to 30, wherein the second information is a radio resource control (RRC) signaling.

32. The method of any of claims 28 to 30, wherein the second information is an MAC CE.

33. The method of claim 32, wherein the second information and the first information share a same MAC CE, or the second information and the first information employ different MAC CEs.

34. The method of claim 33, wherein, in a case that that the second information and the first information share the same MAC CE, each codepoint comprises a first information field and a second information field, wherein the first information field is configured to carry the first information, and the second information field is configured to carry the second information.

35. The method of claim 27, wherein the DCI is further configured to indicate a type of a TCI state comprised in the first information.

36. The method of claim 35, wherein a format of the DCI is a DCI format for scheduling a physical downlink shared channel (PDSCH).

37. The method of claim 36, wherein the DCI comprises a downlink assignment indication field with, or does not comprise a downlink assignment indication field, and the downlink assignment indication field is configured to indicate a downlink transmission resource.

38. The method of any of claims 36 or 37, wherein the DCI format for scheduling the PDSCH is configured to indicate that the type of TCI state comprised in the first information comprises the first TCI state and/or the second TCI state.

39. The method of claim 38, wherein the DCI comprises a TCI state type indication field, the TCI state type indication field of the types of TCI states is configured to indicate that a TCI state indicated by the DCI comprises at least one of the first TCI state, the second TCI state, and a second TCI state dedicated to the downlink transmission.

40. The method of claim 35, wherein a format of the DCI is a DCI format for scheduling a physical uplink shared channel (PUSCH).

41. The method of claim 40, wherein the DCI comprises an uplink assignment indication field with, or does not comprise the uplink assignment indication field, and the uplink assignment indication field is configured to indicate an uplink transmission resource.

42. The method of claim 40 or 41, wherein the DCI format for scheduling the PUSCH is configured to indicate that the type of TCI state comprised in the first information comprises the first TCI state and/or the second TCI state.

43. The method of claim 42, wherein the DCI comprises a TCI state type indication field, wherein the TCI state type indication field is configured to indicate that a TCI state indicated by the DCI comprises at least one of the first TCI state, the second TCI state, and a second TCI state dedicated to the uplink transmission.

44. The method of any of claims 24 to 27, wherein the first information comprises at least one group of information fields, and each group of information fields comprises a third information field and a fourth information field;
the third information field and the fourth information field belonging to a same group of information fields carry two same TCI states respectively; or
the third information field and the fourth information field belonging to a same group of information fields carry two different TCI states respectively.

45. The method of claim 44, wherein, in a case that the third information field and the fourth information field belonging to the same group of information fields carry two different TCI states respectively,
a second TCI state carried in the third information field is configured to indicate the QCL parameter dedicated to the downlink transmission, and a second TCI state carried in the fourth information field is configured to indicate the QCL parameter dedicated to the uplink transmission; or
a second TCI state carried in the third information field is configured to indicate the QCL parameter dedicated to the uplink transmission, and a second TCI state carried in the fourth information field is configured to indicate the QCL parameter dedicated to the downlink transmission.

46. The method according to any of claims 24 to 45, wherein the downlink transmission comprises transmission of at least one of the PDSCH, a physical downlink control channel (PDCCH), and a downlink reference signal; and
the uplink transmission comprises transmission of at least one of the PUSCH, a physical uplink control channel (PUCCH) and an uplink reference signal.

47. An apparatus for indicating a quasi co-location (QCL), comprising:
an information receiving module, configured to receive first information, wherein the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

48. The apparatus of claim 47, wherein each group of second TCI states comprises one or two second TCI states, and each second TCI state is configured to indicate the QCL parameter dedicated to the downlink transmission or the QCL parameter dedicated to the uplink transmission.

49. The apparatus of claim 47 or 48, wherein the first information comprises a first media access layer control element (MAC CE) and the first MAC CE activates at least one first TCI state and/or at least one group of second TCI states corresponding to one codepoint.

50. The apparatus of claim 47 or 48, wherein the first information comprises a second MAC CE and downlink control information (DCI), wherein the second MAC CE activates at least one first TCI state and/or at least one group of second TCI states corresponding to each of a plurality of codepoints, and the DCI indicates one of the plurality of codepoints.

51. The apparatus of any of claims 47 to 50, wherein the information receiving module is further configured to receive second information, wherein the second information is configured to indicate one or more types of one or more TCI states comprised in the first information.

52. The apparatus of claim 51, wherein the second information is an MAC CE.

53. The apparatus of claim 50, wherein the DCI is further configured to indicate a type of TCI state comprised in the first information.

54. The apparatus of any of claims 47 to 50, wherein the first information comprises at least one group of information fields, and each group of information fields comprises a third information field and a fourth information field;
the third information field and the fourth information field belonging to a same group of information fields carry two same TCI states respectively; or
the third information field and the fourth information field belonging to a same group of information fields carry two different TCI states respectively.

55. An apparatus for indicating a quasi co-location (QCL), comprising:
an information sending module, configured to send first information, wherein the first information is configured to indicate at least one first transmission configuration indication (TCI) state and/or at least one group of second TCI states, each first TCI state is configured to indicate a QCL parameter shared by downlink transmission and uplink transmission, and each group of second TCI states is configured to indicate at least one of a QCL parameter dedicated to the downlink transmission and a QCL parameter dedicated to the uplink transmission.

56. The apparatus of claim 55, wherein each group of second TCI states comprises one or two second TCI states, and each second TCI state is configured to indicate the QCL parameter dedicated to the downlink transmission or the QCL parameter dedicated to the uplink transmission.

57. The apparatus of claim 55 or 56, wherein the first information comprises a first media access layer control element (MAC CE), and the first MAC CE activates at least one first TCI state and/or at least one group of second TCI states corresponding to one codepoint.

58. The apparatus of claim 55 or 56, wherein the first information comprises a second MAC CE and downlink control information (DCI), wherein the second MAC CE activates at least one first TCI state and/or at least one group of second TCI states corresponding to each of a plurality of codepoints, and the DCI indicates one of the plurality of codepoints.

59. The apparatus of any of claims 55 to 58, wherein the information sending module is further configured to send second information, wherein the second information is configured to indicate one or more types of one or more TCI states comprised in the first information.

60. The apparatus of claim 59, wherein the second information is an MAC CE.

61. The apparatus of claim 58, wherein the DCI is further configured to indicate a type of TCI state comprised in the first information.

62. The apparatus of any of claims 55 to 58, wherein the first information comprises at least one group of information fields, and each group of information fields comprises a third information field and a fourth information field;
the third information field and the fourth information field belonging to a same group of information fields carry two same TCI states respectively; or
the third information field and the fourth information field belonging to a same group of information fields carry two different TCI states respectively.

63. A communication device, comprising:
a processor; and
a memory, configured to store executable instructions by the processor,
wherein the processor is configured to load and execute the executable instructions to implement the method for indicating the quasi co-location according to any one of claims 1 to 23, or to implement the method for indicating the quasi co-location according to any one of claims 24 to 46.

64. A computer readable storage medium, wherein, instructions in the computer readable storage medium are executed by a processor to implement the method for indicating the quasi co-location according to any one of claims 1 to 23, or the method for indicating the quasi co-location according to any one of claims 24 to 46.

65. A chip, wherein the chip comprises a programmable logic circuit and/or program instructions, and the chip operates on a communication device to implement the method for indicating the quasi co-location according to any one of claims 1 to 23, or the method for indicating the quasi co-location according to any one of claims 24 to 46.

66. A computer program or computer program product, wherein, the computer program or computer program product is executed by a processor to implement the method for indicating the quasi co-location according to any one of claims 1 to 23, or the method for indicating the quasi co-location according to any one of claims 24 to 46.
